# EUROPÄISCHE PATENTSCHRIFT

(11) **EP 0 564 908 B1**
(45) Veröffentlichungstag und Bekanntmachung des Hinweises auf die Patenterteilung: **24.04.1996**
(21) Anmeldenummer: 93104863.1
(22) Anmeldetag: 24.03.1993
(51) Int. Cl.: B29B 7/76

(54) **Einrichtung zum Mischen miteinander reagierender Reaktionskomponenten**
Device for mixing interreacting reactive components
Dispositif pour mélanger des composants de réaction réagissant entre eux

(30) Priorität: 06.04.1992 DE 4211458
(43) Veröffentlichungstag der Anmeldung: 13.10.1993
(73) Patentinhaber: MASCHINENFABRIK HENNECKE GmbH, D-51379 Leverkusen (DE)
(72) Erfinder: Proksa, Ferdinand, Dr., W-5090 Leverkusen 3 (DE); Sulzbach, Hans-Michael, Dipl.-Ing., W-5330 Königswinter 21 (DE); Duschanek, Helmuth, Dipl.-Ing., W-5330 Königswinter 21 (DE); Althausen, Ferdinand, W-5206 Neunkirchen (DE); Wirth, Jürgen, Dipl.-Ing., W-5000 Köln (DE); Raffel, Reiner, Dipl.-Ing., W-5200 Siegburg (DE)
(74) Vertreter: Drope, Rüdiger, Dr.

(56) Entgegenhaltungen:
- EP-A- 0 037 523
- DE-A- 4 103 532

## Beschreibung

Die Erfindung betrifft eine Einrichtung zum Herstellen eines fließfähigen Reaktionsgemisches aus mindestens zwei fließfähigen, miteinander zu Massivstoff oder Schaumstoff ausreagierenden Reaktionskomponenten, bestehend aus Vorratsbehältern, von denen Zuleitungen über Dosierpumpen zu einem Mischkopf führen, welcher eine Mischkammer mit darin geführtem Ausstoßkolben enthält, in die die Zuleitungen mittels Einspritzdüsen münden, und aus einem quer zur Mischkammer in einer in Strömungsrichtung des Gemisches über den Auslaß der Mischkammer hinausreichenden Führungsbohrung angeordneten mit einer Stirnfläche vorsehenen Drosselschieber sowie einem Auslaufkanal mit Reinigungskolben, wie aus EP-B1-0 070 486 bekannt.

Ein Mischkopf zum Herstellen eines fließfähigen Reaktionsgemisches aus mindestens zwei fließfähigen, miteinander zu Massivstoff oder Schaumstoff ausreagierenden Reaktionskomponenten, ist auch aus der US-A-3 975 128 bekannt. Der Mischkammer ist herbei unmittelbar der Auslaufkanal unter einem rechten Winkel nachgeordnet, wobei der Auslaufkanal der Beruhigung des Reaktionsgemisches dienen soll und sich durch den zugeordneten Ausstoßkolben reinigen läßt. In der Praxis ist auch schon versucht worden, diesen Ausstoßkolben zum Androsseln des aus der Mischkammer austretenden Reaktionsgemischstromes zu verwenden. Bei schwer vermischbaren Reaktionskomponenten muß eine so starke Androsselung erfolgen, daß es nicht gelingt, den Gemischstrom vor Eintritt in den Formhohlraum in ausreichendem Maße zu beruhigen. Dies äußert sich darin, daß das Reaktionsgemisch aus der Austrittsöffnung des Auslaufkanals herausspritzt und keine geschlossene Fließfront bildet.

Ein weiterer bekannter Mischkopf (US-A-4 141 470) weist zwischen Mischkammer und Auslaufrohr als Drosselorgan einen Querschieber auf, der mit einer Durchströmöffnung versehen ist. Durch Verschiebung dieses Drosselorgans läßt sich der gewünschte Durchströmquerschnitt einstellen. Zum Zwecke des Reinigens von Mischkammer und Auslaufrohr wird der Drosselschieber in die Reinigungsstellung gebracht, so daß der Ausstoßkolben durch die Durchströmöffnung hindurchfahren kann. Dieser Mischkopf hat eine relativ große Baulänge. Problematisch ist hierbei die exakte Steuerung von Drosselorgan und Ausstoßkolben, damit keine Kollision dieser beiden Elemente erfolgt. Weiterhin ungünstig ist die sich daraus ergebende große Baulange des Ausstoßkolbens, denn hierbei besteht die Gefahr, daß ein zwischen Ausstoßkolben und Mischkammer- und Auslaufrohrwandung verbleibender Gemischfilm den Ausstoßkolben mit dieser Wandung verklebt und ein Blockieren des Kolbens verursachen könnte. Um diesem vorzubeugen, muß man für den Ausstoßkolben einen überdimensionierten Antrieb vorsehen. Wegen der Knickgefahr für den Ausstoßkolben muß dieser in bezug auf seine Länge einen gewissen Mindestdurchmesser aufweisen. Deshalb kann man die Querschnitte von Mischkammer und Auslaufrohr nicht beliebig klein dimensionieren. Nachteilig ist weiterhin, daß Mischkammerquerschnitt und Querschnitt des Auslaufrohres übereinstimmen müssen.

Die eingangs beschriebene Vorrichtung gemäß EP-B1-0 070 486 weist zwar nicht die verfahrenstechnischen Nachteile der vorgenannten Mischköpfe auf, ist jedoch konstruktiv sehr aufwendig und hat demzufolge eine unhandliche Größe.

Um auch bei der Verarbeitung schwer vermischbarer Reaktionskomponenten die schnelle Beruhigung des Gemischstromes nach dem Androsseln noch zu verbessern und bei konstruktiv geringerem Aufwand und kleinen Abmessungen der Einrichtung Störunanfälligkeit, Betriebssicherheit und Selbstreinigung sicherzustellen, hat man gemäß der nicht vorveröffentlichten EP 0 498 227 A1 vorgeschlagen, den Drosselschieber in der Führungsbohrung konzentrisch zum Reinigungskolben anzuordnen, wobei die Führungsbohrung in Strömungsrichtung des Gemisches über den Auslaß der Mischkammer hinausreicht und in der Mischphase mit dem vorderen Ende des Reinigungskolbens einen Ringkanal bildet, der in den Auslaufkanal übergeht.

Dadurch wurde erreicht, daß der aus dem zwischen dem Mischkammerauslaß und dem Drosselschieber gebildeten Drosselspalt austretende Gemischstrom nicht direkt in den Auslaufkanal eintreten kann, sondern er gelangt zunächst in einen Ringkanal, der durch die Wandung der Führungsbohrung des Drosselschiebers nach außen und durch den den Drosselschieber überragenden Reinigungskolben gebildet ist. Aus diesem Ringkanal strömt dann das Reaktionsgemisch zwischen der Übergangskante von Führungsbohrung und Auslaufkanal zu der Stirnkante des Reinigungskolbens als Senkenströmung ab, wobei der Auslaufkanal die Senke bildet. Durch die konzentrische Anordnung von Drosselschieber und Reinigungskolben besitzt diese Einrichtung eine sehr kompakte Bauweise; Kollisionen der Kolben und des Drosselschiebers sind nicht möglich. Überraschenderweise baut sich an der ringförmigen Absatzfläche am Übergang zwischen Führungsbohrung und Auslaufkanal kein Material auf, weil bei gegenstoßendem Drosselschieber Gemischreste voll und ganz weggedrückt werden.

Es hat sich jedoch gezeigt, daß bei dieser Einrichtung bei ungünstiger Stellung des Drosselschiebers und des Ausstoßkolbens sich die gewünschte laminare Senkenströmung nicht oder nur näherungsweise einstellt, weil der angedrosselte Strahl direkt aus der Mischkammer in den Auslaufkanal schießen kann.

Aufgabe der vorliegenden Erfindung ist es deshalb, diese Einrichtung gemäß der EP-A1-0 498 227 so zu verbessern, daß sich auch bei extremer Androsselung die gewünschte laminare Senkenströmung ausbildet.

Gegenstand der vorliegenden Erfindung ist eine Einrichtung zum Herstellen eines fließfähigen Reaktionsgemisches aus mindestens zwei fließfähigen, miteinander zu Massivstoff oder Schaumstoff ausreagierenden Reaktionskomponenten, bestehend aus Vorratsbehältern, von denen Zuleitungen über Dosierpumpen zu einem Mischkopf führen, welcher eine Mischkammer mit darin geführtem Ausstoßkolben enthält, in die die Zuleitungen mittels Einspritzdüsen münden, und aus einem quer zur Mischkammer in einer in Strömungsrichtung des Gemisches über den Auslaß der Mischkammer hinausreichenden Führungsbohrung angeordneten, mit einer Stirnflache versehenen Drosselschieber sowie einem Auslaufkanal mit Reinigungskolben, die dadurch gekennzeichnet ist, daß der Drosselschieber in der Führungsbohrung konzentrisch um den Reinigungskolben angeordnet ist, wobei die Führungsbohrung in der Mischphase mit dem vorderen Ende des Reinigungskolbens einen Ringkanal bildet, der in den Auslaufkanal übergeht, daß die Führungsbohrung in einer der Stirnfläche des Drosselschiebers zugehörigen, parallel zu ihr verlaufenden, einen Absatz zum Auslaufkanal hin bildenden Gegenfläche endet, und daß die Stirnfläche des Drosselschiebers an jedem Punkt unter dem gleichen Winkel zur Mittelachse des Drosselschiebers in Strömungsrichtung geneigt ist wie die Gegenfläche am jeweiligen Gegenpunkt.

Auf diese Weise ist der Ringkanal an seiner der Mischkammer abgewandten Seite verlängert. Dadurch ist es möglich, mit dem Reinigungskolben den Ringkanal auf der der Mischkammer zugewandten Seite zu verschließen, so daß auch bei extremer Androsselung der Gemischstrahl nicht direkt aus der Mischkammer in den Auslaufkanal schießen kann. Daß sich dabei die Senkenströmung nur in einem Teilbereich ausbildet, hat sich in der Praxis nicht als nachteilig erwiesen.

Vorzugsweise sind gemäß einer besonderen Ausführungsform die Stirnfläche des Drosselschiebers sowie die Gegenfläche an jedem ihrer Punkte unter einem gleichbleibenden Winkel geneigt.

Dies ist fertigungstechnisch besonders günstig.

Vorzugsweise beträgt der Winkel zwischen 50 und 80°.

In diesem Bereich ist die Strömung besonders günstig.

Gemäß einer besonderen Ausführungsform weisen die Stirnfläche des Drosselschiebers sowie die Gegenfläche eine an spezielle verfahrenstechnische Erfordernisse angepaßte Kontur auf.

Eine solche Konturierung kann beispielsweise bei gewissen Viskositäten des Reaktionsgemisches von Vorteil sein.

Dadurch läßt sich auf die Strömungsausbildung bzw. auf die Strömungsführung zusätzlicher Einfluß nehmen. Die Kontur ist im Querschnitt der Stirnfläche vorhanden, kann sich aber zusätzlich über den Umfang der Stirnfläche und der Gegenfläche, in jedem Falle aber symmetrisch, ändern.

In einer Zeichnung ist die erfindungsgemäße Einrichtung in einem Ausführungsbeispiel rein schematisch dargestellt, wobei der Mischkopf selbst ausführlich, die Zusatzaggregate jedoch nur symbolhaft wiedergegeben sind. Es zeigen:
- Fig. 1: einen Längsschnitt durch die Einrichtung in Arbeitsstellung,
- Fig. 2: einen Schnitt gemäß Linie A-B in Fig. 1,
- Fig. 3: einen Längsschnitt durch die Einrichtung in Ruhestellung und
- Fig. 4: einen Schnitt gemäß Linie C-D in Fig. 3.

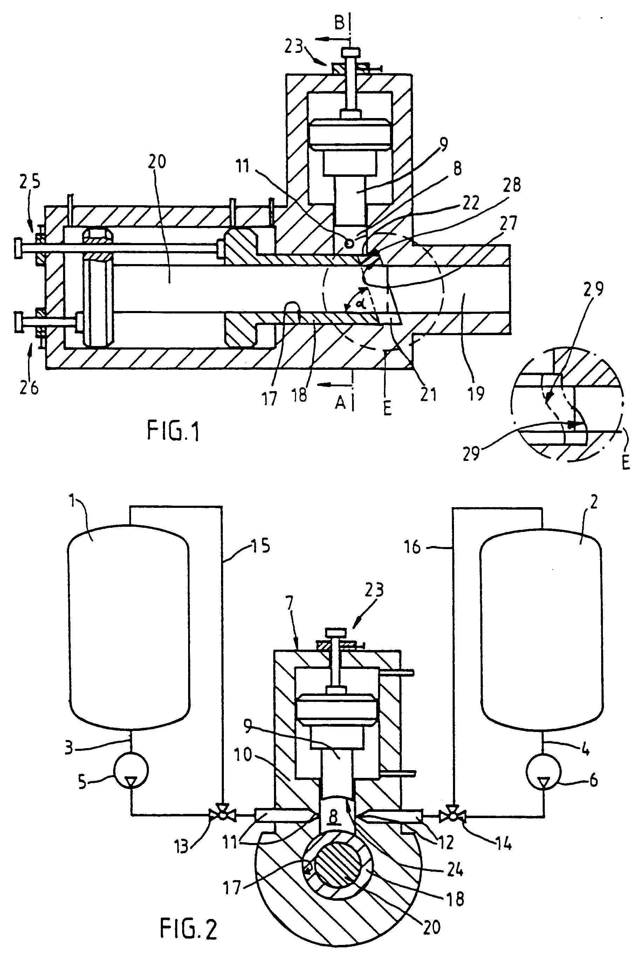

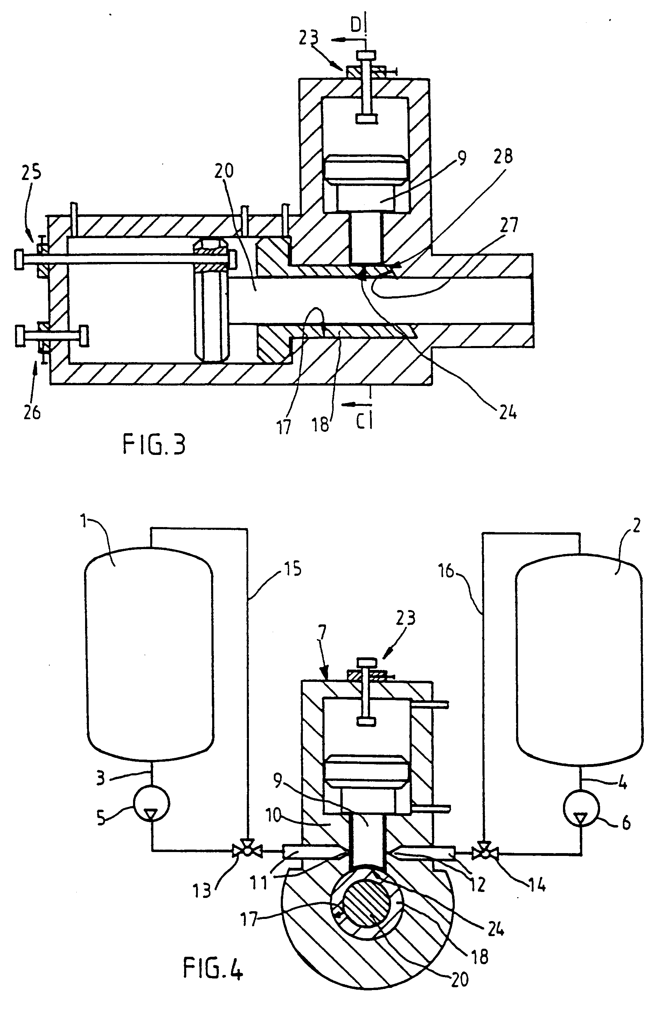

Von Vorratsbehältern 1, 2 für Polyol bzw. Isocyanat führen Zuleitungen 3, 4 über Dosierpumpen 5, 6 zu einem Mischkopf 7. In diesem ist eine Mischkammer 8 angeordnet, in der ein Ausstoßkolben 9 geführt ist. Im Gehäuse 10 des Mischkopfes 7 sind Einspritzdüsen 11, 12 gelagert, über welche die Zuleitungen 3, 4 in die Mischkammer 8 münden. Umschaltventile 13, 14 ermöglichen die Rückförderung der Reaktionskomponenten über die Rücklaufleitungen 15, 16 in die Vorratsbehälter 1, 2. Der Mischkammer 8 nachgeordnet ist quer dazu eine Führungsbohrung 17 für einen Drosselschieber 18. Dieser weist eine unter einem Winkel α von 64° zur Mittelachse von der Mischkammer ausgehend in Strömungsrichtung geneigte Stirnfläche 28 auf und umgibt einen in einem Auslaufkanal 19 geführten Reinigungskolben 20 konzentrisch. Da die Führungsbohrung 17 einen größeren Durchmesser aufweist als der Auslaufkanal 19 bzw. der Reinigungskolben 20, ist ein Ringkanal 21 (Fig. 1) vorhanden, in welchen der durch den Drosselspalt gebildete Auslaß 22 der Mischkammer 8 einmündet (Fig. 1). Dem Ausstoßkolben 9 ist eine Einstellvorrichtung 23 zugeordnet, welche aus einem einstellbaren Anschlag besteht, mit welchem die hintere Totpunktlage wählbar ist. Die vordere Totpunktlage ist konstruktiv so eingestellt, daß die Stirnfläche 24 des Ausstoßkolbens 9 mit der Wandung der Führungsbohrung 17 fluchtet und damit gegen den Drosselschieber 18 anliegt (Fig. 3, 4). Sowohl der Drosselschieber 18 als auch der Reinigungskolben 20 sind mit aus fixierbaren Anschlägen bestehenden Einstellvorrichtungen 25 bzw. 26 für die hinteren Totpunktlagen ausgestattet. Die vordere Totpunktlage des Drosselschiebers 18 ist durch den Absatz 27 am Übergang der Führungsbohrung 17 zum Auslaufkanal 19 gebildet. Dieser Absatz 27 ist die Gegenfläche zur Stirnfläche 28 des Drosselschiebers 18 und unter dem gleichen Winkel α von 64° von der Mischkammer ausgehend in Strömungsrichtung geneigt. Die vordere Totpunktlage des Reinigungskolbens 20 entspricht dem Ende des Auslaufkanals 19.

Aus der Einzelheit E in Fig. 1 ersieht man, daß sowohl die Stirnfläche 28 des Drosselschiebers 18 als auch die parallel verlaufende, als Absatz 27 ausgebildete Gegenfläche alternativ eine geschwungene Kontur 29 aufweisen.

Ausgehend von der Stellung der Kolben und des Drosselschiebers gemäß Fig. 3 und 4 ist die Arbeitsweise folgende:

Die Umschaltventile 13 und 14 sind auf Rezirkulation geschaltet. Der Reinigungskolben 20, der Drosselschieber 18 sowie der Ausstoßkolben 9 werden in ihre hinteren Totpunktlagen gefahren, wobei vorausgesetzt ist, daß diese Totpunktlagen mittels der Einstellvorrichtungen 23, 25 und 26 vorher auf die gewünschte Stellung einjustiert wurden. Nunmehr werden die Umschaltventile 13 und 14 umgesteuert und die Reaktionskomponenten strömen durch die Einströmdüsen 11 und 12 in die Mischkammer 8, verwirbeln dort und gelangen durch den als Drosselspalt ausgebildeten Auslaß 22 in den Ringkanal 21. Der Gemischstrom teilt sich dabei auf und umfließt das über den Drosselschieber 18 vorstehende Ende des Reinigungskolbens 20 und fließt als Senkenströmung in den Auslaufkanal 19 ab. Ist die benötigte Gemischmenge durchgelaufen, schalten die Umschaltventile 13 und 14 auf Rücklauf um und der Austoßkolben 9 fährt in die vordere Totpunktlage, entleert dabei die Mischkammer 8 und füllt sie aus. Sodann fährt der Drosselschieber 18 in seine vordere Totpunktlage und verdrängt dabei das Reaktionsgemisch aus dem Ringkanal 21 und füllt ihn aus. Schließlich wird mit dem Reinigungskolben 20 der Auslaufkanal 19 entleert, indem er in seine vordere Totpunktlage fährt.

## Patentansprüche

1. Einrichtung zum Herstellen eines fließfähigen Reaktionsgemisches aus mindestens zwei fließfähigen, miteinander zu Massivstoff oder Schaumstoff ausreagierenden Reaktionskomponenten, bestehend aus Vorratsbehältern (1, 2), von denen Zuleitungen (3, 4) über Dosierpumpen (5, 6) zu einem Mischkopf (7) führen, welcher eine Mischkammer (8) mit darin geführtem Ausstoßkolben (9) enthält, in die die Zuleitungen (3, 4) mittels Einspritzdüsen (11, 12) münden, und aus einem quer zur Mischkammer (8) in einer in Strömungsrichtung des Gemisches über den Auslaß (22) der Mischkammer (8) hinausreichenden Führungsbohrung (17) angeordneten, mit einer Stirnfläche versehenen Drosselschieber (18) sowie einem Auslaufkanal (19) mit Reinigungskolben (20), dadurch gekennzeichnet, daß der Drosselschieber (18) in der Führungsbohrung (17) konzentrisch um den Reinigungskolben (20) angeordnet ist, wobei die Führungsbohrung (17) in der Mischphase mit dem vorderen Ende des Reinigungskolbens (20) einen Ringkanal (21) bildet, der in den Auslaufkanal (19) übergeht, daß die Führungsbohrung in einer der Stirnfläche (28) des Drosselschiebers (18) zugehörigen, parallel zu ihr verlaufenden, einen Absatz (27) zum Auslaufkanal (19) hin bildenden Gegenfläche (27) endet, und daß die Stirnfläche (28) des Drosselschiebers (18) an jedem Punkt unter dem gleichen Winkel zur Mittelachse des Drosselschiebers (18) in Strömungsrichtung geneigt ist wie die Gegenfläche (27) am jeweiligen Gegenpunkt.

2. Einrichung nach Anspruch 1, dadurch gekennzeichnet, daß die Stirnfläche (28) des Drosselschiebers (18) sowie die Gegenfläche (27) an jedem ihrer Punkte unter einem gleichbleibenden Winkel geneigt sind.

3. Einrichtung nach Anspruch 2, dadurch gekennzeichnet, daß der Winkel zwischen 50 und 80° beträgt.

4. Einrichtung nach Anspruch 1, dadurch gekennzeichnet, daß die Stirnfläche (28) des Drosselschieber (18) sowie die Gegenfläche (27) eine an spezielle verfahrenstechnische Erfordernisse angepaßte Kontur (29) aufweisen.

## Claims

1. Device for producing a flowable reaction mixture of at least two flowable reaction components which react fully with each other to form solid substance or foamed plastics, comprising storage vessels (1, 2), from which feed pipes (3, 4) lead via dosing pumps (5, 6) to a mixing head (7) which contains a mixing chamber (8) with ejector piston (9) guided therein, into which the feed pipes (3, 4) lead by means of injection nozzles (11, 12), and a throttle slide (18) which is arranged transversely to the mixing chamber (8) in a guide bore (17), protruding beyond the discharge (22) of the mixing chamber (8) in the direction of flow of the mixture, and is provided with a front face, as well as a discharge channel (19) with cleaning piston (20), characterized in that the throttle slide (18) is arranged concentrically in the guide bore (17) round the cleaning piston (20), wherein the guide bore (17) in the mixing phase forms an annular channel (21) with the front end of the cleaning piston (20), which annular channel passes into the discharge channel (19), in that the guide bore ends in an opposite face (27) which is associated with the front face (28) of the throttle slide (18), runs parallel to it and forms a shoulder (27) with respect to the discharge channel (19), and in that the front face (28) of the throttle slide (18) is inclined at every point at the same angle to the centre axis of the throttle slide (18) in the direction of flow as the opposite face (27) at the respective opposite point.

2. Device according to Claim 1, characterized in that the front face (28) of the throttle slide (18) and also the opposite face (27) are inclined at a constant angle at each of their points.

3. Device according to Claim 2, characterized in that the angle lies between 50 and 80°.

4. Device according to Claim 1, characterized in that the front face (28) of the throttle slide (18) and also the opposite face (27) exhibit a contour (29) adapted to special process technology requirements.

## Revendications

1. Dispositif pour la préparation d'un mélange réactionnel fluide à partir d'au moins deux constituants réactionnels fluides, réagissant ensemble pour fournir une matière solide ou un produit alvéolaire, constitué de réservoirs de stockage (1, 2), à partir desquels des canalisations (3, 4) mènent en passant par des pompes de dosage (5, 6) à une tête de mélange (7), laquelle contient une chambre de mélange (8) présentant un piston-pousseur (9) guidé dans celle-ci, dans laquelle les canalisations (3, 4) aboutissent au moyen d'injecteurs (11, 12), et d'un tiroir d'étranglement (18) muni d'une surface frontale, perpendiculaire à la chambre de mélange (8), disposé dans un perçage de guidage (17) passant dans la direction de l'écoulement du mélange par la sortie (22) de la chambre de mélange (8) ainsi que d'un canal de sortie (19) présentant un piston de nettoyage (20), caractérisé en ce que le tiroir d'étranglement (18) est disposé dans le perçage de guidage (17) concentriquement au piston de nettoyage (20), le perçage de guidage (17) formant dans la phase de mélange avec l'extrémité avant du piston de nettoyage (20) un canal annulaire (21) qui se confond dans le canal de sortie (19), en ce que le perçage de guidage se termine dans une contre-surface (27) formant vers le canal de sortie (19) une réduction (27) appartenant à la surface frontale (28) du tiroir d'étranglement (18), parallèle à celle-ci, et en ce que la surface frontale (28) du tiroir d'étranglement (18) est inclinée en chaque point selon le même angle par rapport à l'axe du tiroir d'étranglement (18) dans la direction de l'écoulement comme la contre-surface (27) au contre-point respectif.

2. Dispositif selon la revendication 1, caractérisé en ce que la surface frontale (28) du tiroir d'étranglement (18) ainsi que la contre-surface (27) sont inclinées en chacun de leurs points selon un angle constant.

3. Dispositif selon la revendication 2, caractérisé en ce que l'angle est compris entre 50 et 80°.

4. Dispositif selon la revendication 1, caractérisé en ce que la surface frontale (28) du tiroir d'étranglement (18) ainsi que la contre-surface (27) présentent un contour (29) adapté à des besoins technologiques particuliers.
